# EUROPEAN PATENT APPLICATION

(11) **EP 0 610 646 A1**
(43) Date of publication of application: **17.08.1994**
(21) Application number: 93850239.0
(22) Date of filing: 21.12.1993
(51) Int. Cl.: C04B 28/14, E04C 2/04

(54) **Method of manufacturing gypsum wallboards**

(30) Priority: 12.02.1993 SE 9300464
(71) Applicant: Lyckeby Reppe Aktiebolag, S-352 50 Växjö (SE)
(72) Inventor: Bartilson, Lars, S-291 94 Kristianstad (SE)
(74) Representative: Petri, Stellan

(57) **Abstract**

Method of manufacturing plasterboards comprising a gypsum layer between two cardboard sheets adhering to said gypsum layer, a mixture of calcined gypsum, water, wetting agent and starch being applied between the cardboard sheets. The mixture comprises also at least one low molecular weight carbohydrate with a migration velocity which is higher than that of starch in order to strengthen the adhesion between the gypsum and the cardboard sheets.

## Description

The invention relates to a method of manufacturing plasterboards comprising a gypsum layer between two cardboard sheets adhering to said gypsum layer, a mixture of calcined gypsum, water, wetting agent and starch being applied between the cardboard sheets.

In this method of manufacture, the sandwhich method as it is called, the starch functions as a binding agent which is used for strengthening the adhesion between the gypsum and the cardboard sheets as well as for binding the gypsum material. The starch is then used in an amount of 0.25-0.75 % of the final weight of the plasterboard. Among the different types of starch, corn starch is the dominating type of binding agent in this connection. The anchorage mechanism between the gypsum layer and the cardboard sheet is complicated and dependent on the gypsum crystals formed as well as the type of starch used. It has been demonstrated by several investigations that after application of the mixture between the cardboard sheets an increased concentration of starch is obtained at the interface between the gypsum layer and the cardboard sheets, which provides the necessary adhesion between the gypsum and the cardboard sheets.

When the mixture has been applied between the cardboard sheets it is subjected to a drying process to eliminate surplus water not bound during hardening of the gypsum, i.e. the formation of the dihydrate of calcium sulphate. During the drying process the temperature in the gypsum layer will increase and the free water content will evaporate, the vapour penetrating the cardboard sheets and being removed by the ambient air. However, at the same time as the free water is heated a gelatination of the starch takes place at 67-70°C. The starch migrates towards said interface, partly in form of starch grains not swelled and partly as completely or partially gelatinized starch. This migration is obstructed as the starch is gelatinized and swells, more and more water being emitted at the same time. Thus, during the heating of the water containing gypsum layer the migration of starch towards the interface between gypsum and cardboard sheets is critical since the water content will all the time be reduced by evaporation and the concentration of relatively high viscous, macromolecular and gelatinized starch will be increased. The migration of the starch ceases eventually, and if such migration has not been extensive enough, the adhesion between the gypsum layer and the cardboard sheets will be insufficient.

The concentration of starch at the interface can, however, vary depending on the quality of the raw material and the conditions of production, and on certain occasions the concentration of starch at the interface can be so low that no adhesion will be obtained. Among the raw materials it is primarily gypsum that can vary in quality and thus negatively affect the results. Accordingly, there exists a need of eliminating the related disadvantages concerning the manufacturing of plasterboards, which to a large degree are due to variations in the gypsum quality and result in disturbances in the production, cassations and reclamations.

In order to strengthen the adhesion between the gypsum and the cardboard sheets the method according to the invention has obtained the characterizing features of claim 1. It has thus been found that it is possible to eliminate the effect of variations in quality and the adhesion problems.

An embodiment of the invention will be described in more detail below.

When manufacturing plasterboards which in a known manner consist of a gypsum core between two cardboard sheets, the gypsum core comprises a mixture of calcined gypsum, water, wetting agent and, as a binder, starch and, according to the invention, in addition at least one low molecular weight carbohydrate for the purpose of strengthening the adhesion between the gypsum and the cardboard sheets. This low molecular weight carbohydrate must have a migration velocity which is higher than that of starch. Mono- and disaccharides have proved to be extremely suitable as a low molecular weight carbohydrate from an economical as well as a technical point of view. Preferably they consist of dextrose, fructose, or saccharose, individually or in combination. The amount of added low molecular weight carbohydrate ranges from 0.02 to 0.1 % of the final weight of the plasterboard. Within this concentration range a very marked increase in the adhesion between the gypsum core and the cardboard sheets is achieved, which in turn means an increased strength of the plasterboard as a whole.

Apart from the achievment of a marked increase in the adhesion, the amount of starch can also be reduced substantially without the results being negatively affected. This means a large economical saving by itself.

## Claims

1. Method of manufacturing plasterboards comprising a gypsum layer between two cardboard sheets adhering to said gypsum layer, a mixture of calcined gypsum, water, wetting agent and starch being applied between the cardboard sheets, **characterized** in that the mixture also comprises at least one low molecular weight carbohydrate with a migration velocity which is higher than that of starch for the purpose of strengthening the adhesion between the gypsum and the cardboard sheets.

2. Method as in claim 1, **characterized** in that said carbohydrate comprises mono- or disaccharides.

3. Method as in claim 2, **characterized** in that said carbohydrate comprises dextrose, fructose or saccharose, individually or in combination.

4. Method as in any of the preceding claims, **characterized** in that said carbohydrate comprises 0.02 - 0.1 % of the final weight of the plasterboard.

5. Method as in any of the preceding claims, **characterized** in that said carbohydrate being added to the mixture with the starch.
